(19) Europäisches Patentamt
European Patent Office
Office européen des brevets

(11) **EP 2 705 782 A1**

(12) **EUROPEAN PATENT APPLICATION**

(43) Date of publication:
**12.03.2014 Bulletin 2014/11**

(51) Int Cl.:
*A47J 31/40* (2006.01)    *A47J 31/46* (2006.01)

(21) Application number: **13183451.7**

(22) Date of filing: **06.09.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **07.09.2012  IT TO20120777** | (71) Applicant: **SGL Italia S.r.l. con unico socio**<br>**10156 Torino (TO) (IT)**<br><br>(72) Inventor: **Pelletta, Massimo**<br>**15058 Viguzzolo (IT)**<br><br>(74) Representative: **Giannini, Manuela et al**<br>**Studio Torta S.p.A.**<br>**Via Viotti, 9**<br>**10121 Torino (IT)** |

(54) **Beverage vending machine**

(57)    A beverage vending machine, wherein a mixer assembly (2) has a mixer (3) for receiving a soluble powder and hot water and for producing a beverage, and a dispenser (14) connected to the mixer (3) to receive and feed the beverage to a removable cup (12); and wherein the dispenser (14) has an inlet member (20) having a first cross section (S1); an outlet member (24) having a second cross section (S) larger than the first (S1); and a diffuser (22) interposed between the inlet and outlet members (20, 24).

FIG. 3

EP 2 705 782 A1

**Description**

The present invention relates to a beverage vending machine, in particular for hot beverages, each produced by feeding at least one soluble powder and a given quantity of hot water into a cup via a mixer.

Vending machines of the above type normally involve supplying the mixer, and therefore the cup, with a relatively large amount of water, in order to produce the beverage in as short a time as possible. The speed at which the water and the soluble powders flow through the mixer, and the speed at which the beverage is fed into the cup are therefore normally relatively high, thus resulting in the powders only being partly dissolved, and in the formation of bubbles inside the cup.

It is an object of the present invention to provide a beverage vending machine designed to eliminate the above drawbacks.

According to the present invention, there is provided a beverage vending machine as claimed in Claim 1 and preferably in any one of the Claims depending directly or indirectly on Claim 1

A non-limiting embodiment of the invention will be described by way of example with reference to the attached drawings, in which :

> Figure 1 shows a schematic front view, with parts removed for clarity, of a preferred embodiment of the beverage vending machine according to the present invention;
> Figure 2 shows a larger-scale detail of Figure 1;
> Figure 3 shows an axial section of the Figure 2 detail.

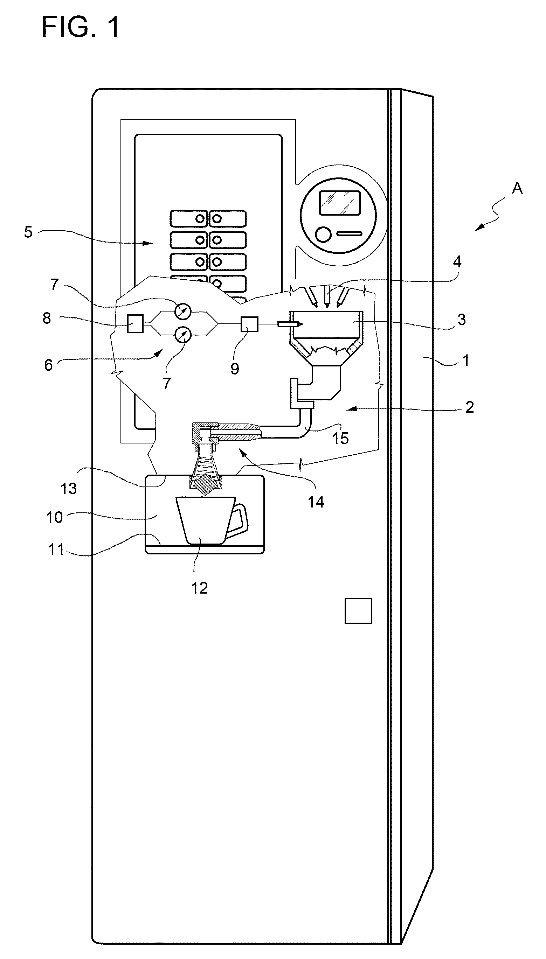

The letter A in Figure 1 indicates as a whole a hot-beverage vending machine comprising a casing 1 housing a mixer assembly 2 comprising a mixer 3, the open top end of which is located beneath a number of nozzles 4, each for feeding a given amount of a respective soluble powder into mixer 3, following user selection of a given beverage on a selection panel 5.

Mixer assembly 2 also comprises a hydraulic circuit 6 for feeding hot water to mixer 3 from a tank (not shown) housed inside casing 1. In the example shown, hydraulic circuit 6 comprises two parallel pumps 7 between a flow measuring device 8 and a boiler 9, but may obviously employ any other known solution comprising at least one pump 7 and at least one boiler 9.

As shown in Figure 1, at the front, casing 1 has a compartment 10, which is accessible from the outside, is bounded at the bottom by a surface 11 for supporting a cup 12, and is bounded at the top by a wall 13, through which is fitted an outlet portion of a dispenser 14 connected by a conduit 15 to an outlet conduit of mixer 3.

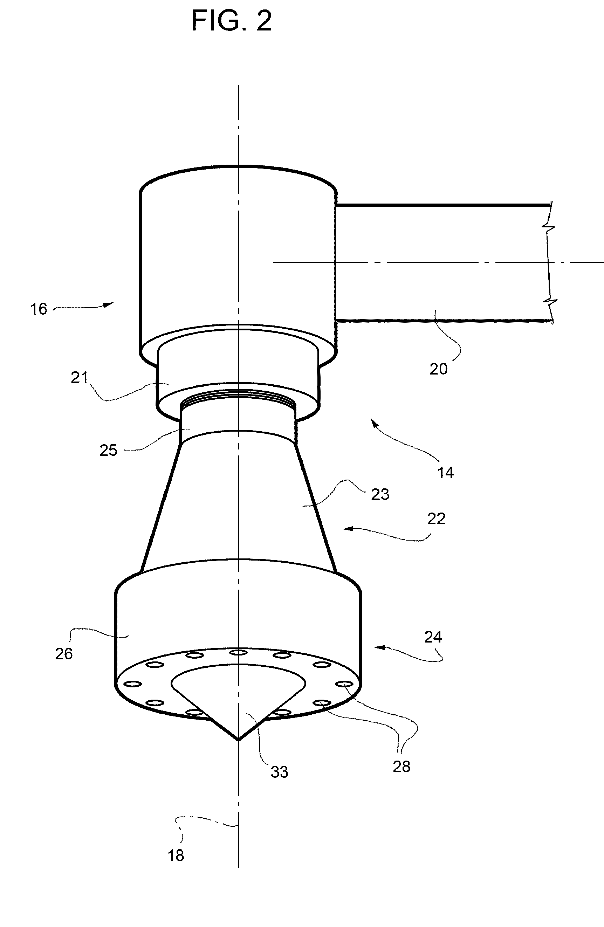

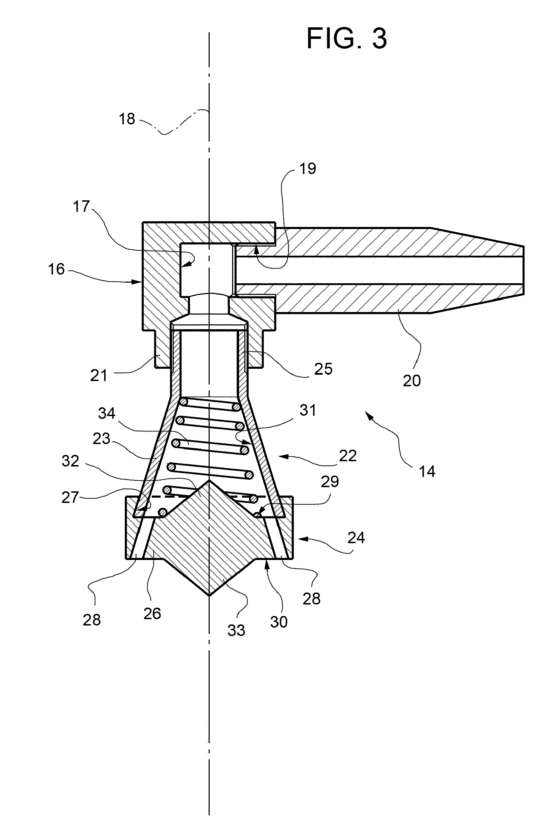

As shown more clearly in Figure 2 and particularly in Figure 3, dispenser 14 comprises a cup-shaped, cylindrical central fitting 16 with a central cavity 17, having a vertical axis 18; central cavity 17 communicates, through a radial hole 19, with a pipe-holder 20 having a conduit with a cross section S1 and connecting central cavity 17 to conduit 15, and communicates, via a sleeve 21 coaxial with axis 18, with a diffuser 22 coaxial with axis 18.

Diffuser 22 comprises a tubular body 23 closed by a cylindrical sprinkler 24 coaxial with tubular body 23 and axis 18. More specifically, tubular body 23 is truncated-cone-shaped, is fitted at the bottom to sprinkler 24, and has, at its narrow top end, an externally threaded tubular projection 25 fitted in fluidtight manner to an internal thread on sleeve 21. Sprinkler 24 is defined by a disk 26, which has a top cavity 27 coaxial with axis 18 and engaged in fluidtight manner by a bottom end portion of tubular body 23.

Sprinkler 24 has a ring of holes 28, each extending through disk 26, between a bottom surface 29 of cavity 27 and an outer end surface 30 of disk 26. More specifically, holes 28 are equally spaced about axis 18, and, in the preferred embodiment shown, extend along respective directrices of a conical surface flaring downwards with a flare angle preferably similar to the one of tubular body 23, to connect a truncated-cone-shaped inner chamber 31 of tubular body 23 to the outside.

The main function of diffuser 22 is to distribute the inlet ends of the holes along a circumference long enough so that, if S2 is the cross section area of each hole 28 and n is the number of holes 28 :

$$nS2 = S > S1$$

In the preferred embodiment shown, S1 ranges between 15 and 20 $mm^2$, S2 between 2 and 3 $mm^2$, and n between 8 and 10, so as to obtain a preferential S value of roughly 3S1 and, therefore, a beverage outflow speed from sprinkler 24 equal to roughly a third of the beverage inflow speed into dispenser 14.

A secondary function of diffuser 22 is to induce swirl in the flow through chamber 31, to ensure, if necessary, that the powders dissolve completely in the water.

A conical projection 32, coaxial with axis 18, extends upwards from surface 29, has a base inscribed within the inner inlet ends of holes 28, and mainly serves to conduct the beverage fed into chamber 31 towards holes 28.

Preferably, but not necessarily, a conical projection 33, coaxial with axis 18, extends downwards from surface 30, has a base inscribed within the outer outlet ends of holes 28, and mainly serves to prevent the beverage jets from holes 28 from converging into a single flow downstream from dispenser 14 and before reaching cup 12.

Preferably, but not necessarily, chamber 31 is fitted inside with a hydraulic resistor for mainly further increasing swirl inside chamber 31. In the example shown, the hydraulic resistor is defined by a coil spring 34 surrounding projection 32 and compressed between surface 29 and the top end of chamber 31.

To conclude, it should be pointed out that, in variations not shown, connection of tubular projection 25 to sleeve 21, of tubular body 23 to sprinkler 24, and of central fitting 16 to pipe-holder 20 may be made using systems technically different but functionally equivalent to those in the example described. Also, in a variation not shown, central fitting 16 and pipe-holder 20 may be formed in one piece.

In actual use, as it flows into inner chamber 31, the water and powder mixture flowing relatively fast along the conduit in pipe-holder 20 expands and therefore undergoes a sharp deceleration, which depends on the ratio between cross section areas S and S1.

The water and powder mixture therefore flows out relatively slowly through holes 28, and the beverage jets issuing from holes 28 are normally not fast enough to produce bubbles on striking the bottom of cup 12.

**Claims**

1. A beverage vending machine comprising a mixer assembly (2) in turn comprising a mixer (3) for receiving a soluble powder and hot water and for producing a beverage, and a dispenser (14) connected to the mixer (3) to receive and feed the beverage to a removable cup (12); the dispenser (14) comprising an inlet member (20) having a first cross section (S1); an outlet member (24) having a second cross section (S) larger than the first (S1); and a diffuser (22) interposed between the inlet and outlet members (20, 24); the vending machine (A) being **characterized in that** the outlet member (24) is a sprinkler (24) comprising a disk (26) having a ring of through holes (28), each of which has a third cross section (S2); said second cross section (S) being equal to the sum of said third cross sections (S2).

2. A vending machine as claimed in Claim 1, wherein the first cross section (S1) equals roughly a third of the second cross section (S).

3. A vending machine as claimed in Claim 1 or 2, wherein the diffuser (22) comprises a truncated-cone-shaped tubular body (23) connected at its wide end to the outlet member (24).

4. A vending machine as claimed in one of the foregoing Claims, wherein the disk (26) has an axis (18), and a cavity (27) coaxial with the axis (18) and engaged in fluidtight manner by an end portion of the diffuser (22), so as to define, inside the diffuser (22), a chamber (31) communicating with the inlet member (20); the holes (28) being equally spaced about the axis (18), and extending from said cavity (27) along respective directrices of a conical surface, so as to connect said chamber (31) to the outside.

5. A vending machine as claimed in Claim 4, wherein the disk (26) has a conical projection (32) extending inwards of said chamber (31) from said cavity (27) and coaxially with said axis (18); the projection (32) having a base surrounded by said holes (28).

6. A vending machine as claimed in Claim 5, and comprising hydraulic-resistance means (34) inside said chamber (31).

7. A vending machine as claimed in Claim 6, wherein said hydraulic-resistance means (34) comprise a coil spring (34) coaxial with said axis (18) and fitted to said projection (32).

8. A vending machine as claimed in one of the foregoing Claims, wherein the disk (26) has a conical outer projection (33) coaxial with said axis (18); the outer projection (33) having a base surrounded by said holes (28).

# FIG. 1

# FIG. 2

# FIG. 3

Europäisches
Patentamt

European
Patent Office

Office européen
des brevets

# EUROPEAN SEARCH REPORT

**Application Number**

EP 13 18 3451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/285955 A1 (CROW DARREN WILLIAM [US] ET AL) 19 November 2009 (2009-11-19) | 1,2 | INV. A47J31/40 A47J31/46 |
| A | * paragraphs [0025], [0026], [0040] - [0045]; figures 1, 2 * | 3,6,7 | |
| A | US 2004/118291 A1 (CARHUFF PETER W [US] ET AL) 24 June 2004 (2004-06-24) * paragraphs [0052], [0063]; figure 4 * | 1,5 | |
| A | EP 1 002 489 A1 (POLTI SPA [IT]) 24 May 2000 (2000-05-24) * paragraphs [0018], [0027]; figures 1, 6 * | 1 | |

TECHNICAL FIELDS
SEARCHED        (IPC)

A47J

The present search report has been drawn up for all claims

| Place of search | Date of completion of the search | Examiner |
|---|---|---|
| Munich | 9 October 2013 | Novelli, Bruno |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 18 3451

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2013

| Patent document cited in search report | | Publication date | Patent family member(s) | | Publication date |
|---|---|---|---|---|---|
| US 2009285955 | A1 | 19-11-2009 | AU | 2009248206 A1 | 19-11-2009 |
| | | | CA | 2724204 A1 | 19-11-2009 |
| | | | EP | 2296514 A1 | 23-03-2011 |
| | | | ES | 2390581 T3 | 14-11-2012 |
| | | | JP | 2011520485 A | 21-07-2011 |
| | | | TW | 201002256 A | 16-01-2010 |
| | | | US | 2009285955 A1 | 19-11-2009 |
| | | | WO | 2009138313 A1 | 19-11-2009 |
| US 2004118291 | A1 | 24-06-2004 | AT | 421272 T | 15-02-2009 |
| | | | AT | 552758 T | 15-04-2012 |
| | | | AU | 2003289982 A1 | 22-07-2004 |
| | | | CA | 2511181 A1 | 15-07-2004 |
| | | | CN | 1731947 A | 08-02-2006 |
| | | | CN | 1731948 A | 08-02-2006 |
| | | | EP | 1578234 A1 | 28-09-2005 |
| | | | EP | 1894501 A2 | 05-03-2008 |
| | | | ES | 2318188 T3 | 01-05-2009 |
| | | | ES | 2385817 T3 | 01-08-2012 |
| | | | HK | 1081416 A1 | 19-06-2009 |
| | | | HK | 1119547 A1 | 21-09-2012 |
| | | | JP | 4528133 B2 | 18-08-2010 |
| | | | JP | 2006512642 A | 13-04-2006 |
| | | | KR | 20050088474 A | 06-09-2005 |
| | | | MX | PA05006840 A | 16-08-2005 |
| | | | MY | 135139 A | 29-02-2008 |
| | | | MY | 135638 A | 30-05-2008 |
| | | | MY | 137370 A | 30-01-2009 |
| | | | TW | I322678 B | 01-04-2010 |
| | | | TW | I332393 B | 01-11-2010 |
| | | | TW | 200938141 A | 16-09-2009 |
| | | | US | 2004118291 A1 | 24-06-2004 |
| | | | US | 2004194811 A1 | 07-10-2004 |
| | | | US | 2005098575 A1 | 12-05-2005 |
| | | | US | 2005115597 A1 | 02-06-2005 |
| | | | WO | 2004058020 A1 | 15-07-2004 |
| EP 1002489 | A1 | 24-05-2000 | NONE | | |

EPO FORM P0459

For more details about this annex : see Official Journal of the European Patent Office, No. 12/82